# EUROPÄISCHE PATENTSCHRIFT

(11) **EP 3 354 346 B1**
(45) Veröffentlichungstag und Bekanntmachung des Hinweises auf die Patenterteilung: **20.01.2021**
(21) Anmeldenummer: 18150162.8
(22) Anmeldetag: 03.01.2018
(51) Int. Cl.: B04B 9/08, F16D 1/08, F16D 1/092, F16D 1/09

(54) **ZENTRIFUGE ZUR STOFFTRENNUNG**
CENTRIFUGE FOR SEPARATING SUBSTANCES
CENTRIFUGEUSE DESTINÉE À LA SÉPARATION DES SUBSTANCES

(30) Priorität: 25.01.2017 DE 102017101345
(43) Veröffentlichungstag der Anmeldung: 01.08.2018
(73) Patentinhaber: Andritz KMPT GmbH, 85256 Vierkirchen (DE)
(72) Erfinder: SCHERER, Dieter, 85276 Pfaffenhofen (DE); FELLER, Johannes, 83104 Tuntenhausen (DE)
(74) Vertreter: Viering, Jentschura & Partner mbB Patent- und Rechtsanwälte

(56) Entgegenhaltungen:
- EP-A1- 1 574 732
- WO-A1-2016/112427
- DE-A1- 2 501 513
- DE-A1-102004 061 451

## Beschreibung

Die vorliegende Erfindung betrifft eine Zentrifuge zur Stofftrennung, zum Beispiel eine Zentrifuge zur Feststoff-Flüssigkeit-Trennung, wie zum Beispiel eine Filterzentrifuge zum Ausfiltern eines Feststoffmaterials aus einer Suspension, oder zum Beispiel eine Zentrifuge zur Flüssigkeit-Flüssigkeit-Trennung.

Zentrifugen zur Stofftrennung werden zum Beispiel bei chemischen, pharmazeutischen und biologischen Anwendungen im industriellen Maßstab zur Filtration von Suspensionen (Feststoff-Flüssigkeit-Gemischen) oder zur Trennung von Flüssigkeiten unterschiedlicher Dichte eingesetzt.

Als eine Bauform einer herkömmlichen Zentrifuge zur Stofftrennung ist zum Beispiel eine Filterzentrifuge wie zum Beispiel eine diskontinuierliche Schälzentrifuge bekannt. Diese weist zum Beispiel eine in einem Gehäuse drehbar gelagerte Zentrifugen-Trommel (zum Beispiel Filtertrommel) auf, welcher mittels einer Suspension-Zuführvorrichtung, welche (zum Beispiel zumindest in einem Suspension-Zuführbetrieb) in die Zentrifugen-Trommel hineinragt, eine zu filtrierende Suspension zugeführt wird. Ferner ragt (zum Beispiel zumindest in einem Feststoffmaterial-Austragebetrieb) eine Feststoffmaterial-Austragvorrichtung in die Zentrifugen-Trommel hinein, mittels welcher das ausgefilterte Feststoffmaterial aus der Zentrifugen-Trommel ausgetragen wird. Ferner weist die Zentrifuge eine Antriebswelle auf, die sich koaxial zu einer von der Zentrifugen-Trommel definierten Trommelachse erstreckt und die mit der Zentrifugen-Trommel mittels einer Welle-Nabe-Verbindungseinrichtung drehfest verbunden ist. Ferner weist die Zentrifuge an einer Innenumfangsfläche der Zentrifugen-Trommel ein Filtermittel auf (zum Beispiel ein Filtertuch oder ein Filtersieb), welches zum Ausfiltern des Feststoffmaterials aus der Suspension dient und welches, zum Beispiel mittels Spannmitteln, in der Zentrifugen-Trommel gehalten ist.

Beispiele aus dem Stand der Technik sind z.B. in DE 25 01 513 A1,
WO 2016/112427 A1, EP 1 574 732 A1 und DE 10 2004 061451 A1 beschrieben. Die DE 25 01 513 A1 offenbart eine Vorrichtung zur lösbaren Verbindung des umlaufend angetriebenen Arbeitskopfes einer Laborzentrifuge mit der Abtriebswelle des zugehörigen Antriebsmotors, bei der das Abtriebswellenende über eine Stirnschraube in einer zentralen Bohrung im Arbeitskopf verspannt ist. Die WO 2016/112427 A1 offenbart eine Zentrifugal-Vorrichtung, bei der eine Spiralanordnung vorgesehen ist, die von einer Spiralanordnung-Antriebswelle angetrieben wird und durch einen Axialeinsteller mit der Spiralanordnung verbunden ist, der einen Wellennockenabschnitt und einen Spiralabschnitt aufweist, die jeweils eine Kurvenfläche haben, wodurch die relative Drehung des Spiralabschnitts und des Wellenabschnitts die Nähe der Flügel zu einer koaxialen konischen Abschirmfläche axial einstellt, und einen Verriegelungsring, der selektiv betätigbar ist, um den Spiralabschnitt und den Wellenabschnitt drehfest zu befestigen. Die EP 1 574 732 A1 offenbart eine Spannvorrichtung zum lösbaren Festpannen einer zylindrischen Nabe auf einer zylindrischen Welle, insbesondere eines Zentrifugenrotors auf einer zylindrischen Welle, mit zwei schraubenfederförmig gewundenen Spannelementen. Die DE 10 2004 061451 A1 offenbart eine Rolle für Textilmaschinen mit einer lösbaren Verbindung zwischen Welle und Nabe, dadurch gekennzeichnet, dass diese entweder durch zusätzlich in oder zwischen Welle und Nabe eingeführte Klemmelemente reibschlüssig mittels gegeneinander gepresster Klemmflächen erreicht wird, welche Flächen im Wesentlichen wenigstens zum Teil quer zur radialen Richtung der Welle-Nabe-Verbindung liegen, oder dass formschlüssig gegeneinander liegende Flächen an Welle und Nabe vorgesehen sind, wobei diese Flächen im Wesentlichen quer zur Umfangsrichtung bzw. Drehrichtung der Rollenrotationsachse liegen.

Durch die Erfindung wird eine Zentrifuge zur Stofftrennung geschaffen, die im Hinblick auf eine Verbindung einer Zentrifugen-Trommel mit einer Antriebswelle verbessert ist.

Hierzu stellt die vorliegende Erfindung eine Zentrifuge zur Stofftrennung gemäß Anspruch 1 bereit. Weitere Ausgestaltungen der erfindungsgemäßen Zentrifuge sind in den abhängigen Ansprüchen beschrieben.

Gemäß verschiedenen Aspekten der vorliegenden Erfindung hat eine Zentrifuge zur Stofftrennung (zum Beispiel Feststoff-Flüssigkeit-Trennung, zum Beispiel Flüssigkeit-Flüssigkeit-Trennung) eine Zentrifugen-Trommel (zum Beispiel Filtertrommel), die eine Trommelachse (zum Beispiel Trommellängsachse, zum Beispiel Filtertrommellängsachse) definiert und die um die Trommelachse drehbar gelagert ist (zum Beispiel drehbar ist, zum Beispiel mittels eines Drehantriebs, zum Beispiel in eine Filtertrommelbetriebsdrehrichtung).

Die Zentrifuge kann zum Beispiel eine Filterzentrifuge sein, welche ein Filtermittel (bzw. ein Filtermedium, zum Beispiel ein Filtertuch, zum Beispiel ein Filtersieb) aufweist, welches sich rings der Trommelachse entlang einer Innenumfangsfläche der Zentrifugen-Trommel erstreckt und an welchem in einem Filterbetrieb der Filterzentrifuge ausgefiltertes Feststoffmaterial anhaften bleibt (zum Beispiel anhaftet). Das Filtermittel kann zum Beispiel dazu eingerichtet sein, Feststoffmaterial aus einer zu filtrierenden Suspension zurückzuhalten bzw. auszufiltern und eine Flüssigkeit der zu filtrierenden Suspension durchzulassen. Die Filterzentrifuge kann von der eingangs erläuterten Bauart sein. Die Zentrifuge könnte aber zum Beispiel auch eine Sedimentationszentrifuge, wie zum Beispiel eine Dekanter-Zentrifuge, oder zum Beispiel ein Separator oder zum Beispiel eine Schubzentrifuge sein.

Die Trommelachse kann zum Beispiel beliebig ausgerichtet/angeordnet sein. Die Trommelachse kann zum Beispiel zumindest im Wesentlichen horizontal ausgerichtet/angeordnet sein. Die Trommelachse kann zum Beispiel zumindest im Wesentlichen vertikal ausgerichtet/angeordnet sein.

Die Zentrifugen-Trommel kann zum Beispiel nur einseitig mittels der Antriebswelle und damit fliegend drehgelagert sein.

Die Zentrifuge zur Stofftrennung hat ferner eine (zum Beispiel zumindest im Wesentlichen zylindrische) Antriebswelle, die sich koaxial zur Trommelachse erstreckt (zum Beispiel die eine Wellenachse definiert, die zumindest im Wesentlichen deckungsgleich mit der Trommelachse ist bzw. zu dieser fluchtet) und die mit der Zentrifugen-Trommel über eine Welle-Nabe-Verbindungseinrichtung drehfest verbunden ist, um Drehantriebs-Drehmoment von der Antriebswelle auf die Zentrifugen-Trommel übertragen zu können (zum Beispiel zu übertragen).

Die Welle-Nabe-Verbindungseinrichtung weist eine Nabe auf, die an einer Trommelwand der Zentrifugen-Trommel ausgebildet ist und die eine sich koaxial zur Trommelachse erstreckende Nabenöffnung hat, welche einen Innenumfang definiert.

Die Nabe kann zum Beispiel von einer Trommelwand der Zentrifugen-Trommel stofflich einstückig (bzw. integral) ausgebildet sein.

Die Welle-Nabe-Verbindungseinrichtung weist ferner einen Einsteckabschnitt auf, der von einem Stirnendabschnitt der Antriebswelle gebildet ist und der in die Nabenöffnung eingesteckt ist, wobei der Einsteckabschnitt einen zentralen, zur Trommelachse koaxialen Zapfen und eine den Zapfen koaxial umgebende (zum Beispiel kontinuierlich bzw. ununterbrochen umlaufende) Ringaussparung aufweist, welche an einem Stirnende des Einsteckabschnitts offen ist (zum Beispiel rings der Trommelachse herum kontinuierlich bzw. ununterbrochen offen ist) und welche außenumfänglich von einer äußeren (zum Beispiel geschlossenen) Ringwand des Einsteckabschnitts umgeben ist, welche Ringwand außenumfänglich mit dem Innenumfang der Nabenöffnung in Kontakt ist.

Die Nabenöffnung kann zum Beispiel eine sich entlang der Trommelachse erstreckende Nabenöffnung-Länge haben und die Ringwand kann eine sich entlang der Trommelachse erstreckende Ringwand-Länge haben, wobei die Ringwand-Länge kürzer als die Nabenöffnung-Länge sein kann oder wobei die Ringwand-Länge gleich oder größer als die Nabenöffnung-Länge sein kann. Die Nabenöffnung kann ferner zum Beispiel einen Nabenöffnung-Durchmesser haben, der an einer Stelle des geringsten Durchmessers der Nabenöffnung ermittelt (bzw. gemessen) ist/wird, wobei die Nabenöffnung-Länge gleich oder kleiner als der Nabenöffnung-Durchmesser sein kann oder wobei die Nabenöffnung-Länge größer als der Nabenöffnung-Durchmesser sein kann.

Der Einsteckabschnitt kann zum Beispiel außenumfänglich eine sich zu seinem Stirnende hin verjüngende Konus-Form haben und die Nabenöffnung kann eine dazu komplementäre Konus-Form haben. In einer geschnittenen Seitenansicht des Einsteckabschnitts (bzw. der Welle-Nabe-Verbindungseinrichtung), wobei der Schnitt durch die Trommelachse verläuft, kann zum Beispiel ein Winkel zwischen der Trommelachse (bzw. einer Geraden, die parallel zu der Trommelachse verläuft) und einem von der äußeren Ringwand definierten Außenumfang (bzw. dem Innenumfang der Nabenöffnung) gleich oder kleiner als 20° (zum Beispiel gleich oder kleiner als 15°, zum Beispiel gleich oder kleiner als 10°, zum Beispiel gleich oder kleiner als 5°) sein.

Der Zapfen kann zum Beispiel ein von der Antriebswelle separates Bauteil sein, das stirnseitig in die Antriebswelle eingesetzt und dort fest angebracht ist. Der Zapfen kann zum Beispiel eine zumindest im Wesentlichen zylindrische Form haben. Der Zapfen kann zum Beispiel in ein an der Stirnseite der Antriebswelle angeordnetes zum Beispiel zumindest im Wesentlichen zylinderförmiges Sackloch eingesetzt sein. Der Zapfen kann zum Beispiel lösbar, zum Beispiel mittels Schrauben, mit der Antriebswelle verbunden sein. Der Zapfen kann zum Beispiel nicht lösbar, zum Beispiel mittels Nieten oder durch Verschweißen, mit der Antriebswelle verbunden sein. Der Zapfen kann zum Beispiel stofflich einstückig (bzw. integral) von der Antriebswelle ausgebildet sein. Der Zapfen kann zum Beispiel von einem Schraubbolzen gebildet sein, welcher stirnseitig in den Einsteckabschnitt geschraubt ist. Der Zapfen kann zum Beispiel von einem zentralen Zapfenteil, welcher stirnseitig in dem Einsteckabschnitt befestigt ist, und einer Hülse gebildet sein, welche auf den zentralen Zapfenteil gesetzt ist und an welcher der Spannsatz angreift. Der zentrale Zapfenteil kann zum Beispiel von einem Schraubbolzen, zum Beispiel von dem vorausgehend erläuterten Schraubbolzen, gebildet sein. Der Zapfen kann zum Beispiel von einem stofflich einstückigen Zylinderzapfen gebildet sein, der eine Zylinderachse definiert, die koaxial zu der Trommelachse ist (zum Beispiel die zumindest im Wesentlichen deckungsgleich mit der Trommelachse ist bzw. zu dieser fluchtet), und der stirnseitig in den Einsteckabschnitt gepresst ist.

Die Ringaussparung kann zum Beispiel eine an, zum Beispiel in, dem Stirnendabschnitt der Antriebswelle angeordnete Nut sein, die zum Beispiel zumindest im Wesentlichen ringförmig und koaxial zur Trommelachse ist. Die Ringaussparung kann zum Beispiel von einem an, zum Beispiel in, dem Stirnendabschnitt der Antriebswelle angeordneten, zumindest im Wesentlichen zylinderförmigen und zur Trommelachse koaxialen Sackloch geformt sein, in dem ein zumindest im Wesentlichen zylinderförmiger und zur Trommelachse koaxialer zentraler Zapfen oder Bolzen angeordnet ist, wobei der zentrale Zapfen zum Beispiel wie oben beschrieben ausgestaltet sein kann. Die Ringaussparung kann zum Beispiel eine zumindest im Wesentlichen hohlzylindrische Form haben.

Die Ringwand kann zum Beispiel stofflich einstückig (bzw. integral) von, zum Beispiel mit, der Antriebswelle ausgebildet sein. Die Ringwand kann zum Beispiel eine Ringwandstärke (bzw. Ringwanddicke) haben, die an dem Stirnende des Einsteckabschnitts ermittelt ist/wird, und das Stirnende des Einsteckabschnitts kann zum Beispiel einen Stirnende-Durchmesser haben, der an dem Stirnende des Einsteckabschnitts ermittelt ist/wird, wobei die Ringwandstärke gleich oder kleiner als 30% (zum Beispiel gleich oder kleiner als 20%, zum Beispiel gleich oder kleiner als 10%, zum Beispiel gleich oder kleiner als 5%) des Stirnende-Durchmessers ist.

Die Welle-Nabe-Verbindungseinrichtung weist ferner wenigstens einen Spannsatz auf, der in die Ringaussparung eingesetzt ist und von welchem rings des zentralen Zapfens eine radiale Spannkraft erzeugbar ist (zum Beispiel erzeugt wird), mittels deren die äußere Ringwand außenumfänglich radial gegen den Innenumfang der Nabenöffnung verspannbar ist (bzw. spannbar ist, zum Beispiel verspannt wird). Die Spannkraft kann zum Beispiel rings um den Zapfen herum kontinuierlich oder unterbrochen aufbringbar sein.

Der Spannsatz ist ein ringförmiger Spannsatz. Die Welle-Nabe-Verbindungseinrichtung kann ferner zum Beispiel mehrere Spannsätze aufweisen, die in der Ringaussparung angeordnet sind und die entlang der Trommelachse gesehen in einem Abstand voneinander angeordnet sind. Der Spannsatz kann zum Beispiel ein herkömmlicher, kommerziell erhältlicher Spannsatz sein, zum Beispiel ein Spannsatz, der aus zwei Spannringen besteht, die mittels Schrauben verspannt werden, oder ein Spannsatz, der aus vier Spannringen besteht, die mittels Schrauben verspannt werden. Die Welle-Nabe-Verbindungseinrichtung kann ferner zum Beispiel ein stirnseitiges Spannstück aufweisen, welches die Nabenöffnung zumindest im Wesentlichen diametral überspannt. Der Schraubbolzen kann sich durch das Spannstück hindurch erstrecken (und sich an dem Spannstück axial (in Richtung der Trommelachse) abstützen), sodass der Einsteckabschnitt durch Anziehen des Schaubbolzens axial gegen die Nabe spannbar ist. Das Spannstück kann zum Beispiel als ein Deckel ausgebildet sein, welcher die Ringaussparung stirnseitig (d.h. an deren offenen Stirnseite) zumindest im Wesentlichen (vollständig) abdeckt. Das Spannstück kann zum Beispiel als ein Deckel ausgebildet sein, welcher die Nabenöffnung stirnseitig des Einsteckabschnitts zumindest im Wesentlichen (vollständig) abdeckt.

Die Antriebswelle kann zum Beispiel eine sich koaxial zur Trommelachse erstreckende Wellenöffnung (zum Beispiel Bohrung) haben, die einen Wellenöffnung-Durchmesser definiert und sich in axialer Richtung (in Richtung der Trommelachse) durch die gesamte Antriebswelle hindurch erstreckt. Die Antriebswelle kann damit zum Beispiel eine Hohlwelle sein. Der Zapfen kann zum Beispiel eine sich koaxial zur Trommelachse erstreckende Zapfenöffnung (zum Beispiel Bohrung) haben, die einen Zapfenöffnung-Durchmesser definiert und sich in axialer Richtung (in Richtung der Trommelachse) durch den gesamten Zapfen hindurch erstreckt. Das Spannstück kann eine sich koaxial zur Trommelachse erstreckende Spannstücköffnung (zum Beispiel Bohrung) haben, die einen Spannstücköffnung-Durchmesser definiert und sich in axialer Richtung (in Richtung der Trommelachse) durch das gesamte Spannstück hindurch erstreckt. Der Wellenöffnung-Durchmesser, der Zapfenöffnung-Durchmesser und der Spannstücköffnung-Durchmesser können zum Beispiel zumindest im Wesentlichen gleich groß sein. Der Wellenöffnung-Durchmesser, der Zapfenöffnung-Durchmesser und/oder der Spannstücköffnung-Durchmesser können zum Beispiel gleich oder kleiner als 30% (zum Beispiel gleich oder kleiner als 20%, zum Beispiel gleich oder kleiner als 10%, zum Beispiel gleich oder kleiner als 5%) des Stirnende-Durchmessers sein.

Durch die Erfindung ist eine Verbindung einer Zentrifugen-Trommel mit einer Antriebswelle geschaffen, die einfach/unkompliziert aufgebaut ist und die sicher die erforderlichen Drehmomente übertragen kann. Die erfindungsgemäße Verbindung ist ferner für herkömmlich verwendete Werkstoffe (zum Beispiel Stahl als Material der Antriebswelle und zum Beispiel nichtrostender bzw. rostfreier Stahl als Material der Trommel) geeignet.

Durch das Einsetzen des Spannsatzes in die Ringaussparung der Antriebswelle wird zum Beispiel ein direkter Kontakt zwischen dem Spannsatz und der Nabe vermieden und es ist möglich, ein Einarbeiten des Spannsatzes in die Trommel zumindest zu behindern.

Durch den Einsteckabschnitt, der außenumfänglich eine sich zu seinem Stirnende hin verjüngende Konus-Form hat, und die Nabenöffnung, die eine dazu komplementäre Konus-Form hat, ist es zum Beispiel möglich, die Welle und die Zentrifugen-Trommel einfacher und sauberer zu zentrieren.

Durch das stirnseitige Spannstück, welches die Nabenöffnung zumindest im Wesentlichen diametral überspannt, ist es zum Beispiel möglich, ein Eindringen von Flüssigkeit in die Ringaussparung und/oder die Nabenöffnung zumindest zu behindern. Dadurch ist es möglich, eine Korrosion des Spannsatzes, des zentralen Zapfens, der Nabenöffnung und/oder des Einsteckabschnitts zumindest zu behindern.

Beispielgebende, aber nicht einschränkende Ausführungsformen der vorliegenden Erfindung sind in den Figuren dargestellt und werden im Folgenden näher erläutert.

Es zeigen:
Figur 1 eine vereinfachte, schematische, geschnittene Ansicht einer Welle-Nabe-Verbindungseinrichtung einer Zentrifuge zur Stofftrennung gemäß einer ersten Ausführungsform der vorliegenden Erfindung.
Figur 2 eine vereinfachte, schematische, geschnittene Ansicht einer Welle-Nabe-Verbindungseinrichtung einer Zentrifuge zur Stofftrennung gemäß einer zweiten Ausführungsform der vorliegenden Erfindung.
Figur 3 eine vereinfachte, schematische, geschnittene Ansicht einer Welle-Nabe-Verbindungseinrichtung einer Zentrifuge zur Stofftrennung gemäß einer dritten Ausführungsform der vorliegenden Erfindung.
Figur 4 eine vereinfachte, schematische, geschnittene Ansicht einer Welle-Nabe-Verbindungseinrichtung einer Zentrifuge zur Stofftrennung gemäß einer vierten Ausführungsform der vorliegenden Erfindung.
Figur 5 eine vereinfachte, schematische, geschnittene Ansicht einer Welle-Nabe-Verbindungseinrichtung einer Zentrifuge zur Stofftrennung gemäß einer fünften Ausführungsform der vorliegenden Erfindung.
Figur 6 eine vereinfachte, schematische Ansicht einer Welle-Nabe-Verbindungseinrichtung einer Zentrifuge zur Stofftrennung gemäß der ersten Ausführungsform der vorliegenden Erfindung, wobei der Spannsatz nicht eingesetzt ist.
Figur 7 eine vereinfachte, schematische Ansicht einer Welle-Nabe-Verbindungseinrichtung einer Zentrifuge zur Stofftrennung gemäß der ersten Ausführungsform der vorliegenden Erfindung, wobei der Spannsatz eingesetzt ist.
Figur 8 eine vereinfachte, schematische, teilweise geschnittene Ansicht einer Zentrifuge zur Stofftrennung gemäß der ersten Ausführungsform der vorliegenden Erfindung.
Figur 9 eine vereinfachte, schematische, geschnittene Ansicht einer Welle-Nabe-Verbindungseinrichtung einer Zentrifuge zur Stofftrennung gemäß einer sechsten Ausführungsform der vorliegenden Erfindung.

In den Figuren sind identische oder ähnliche Elemente mit identischen Bezugszeichen versehen, soweit dies zweckmäßig ist.

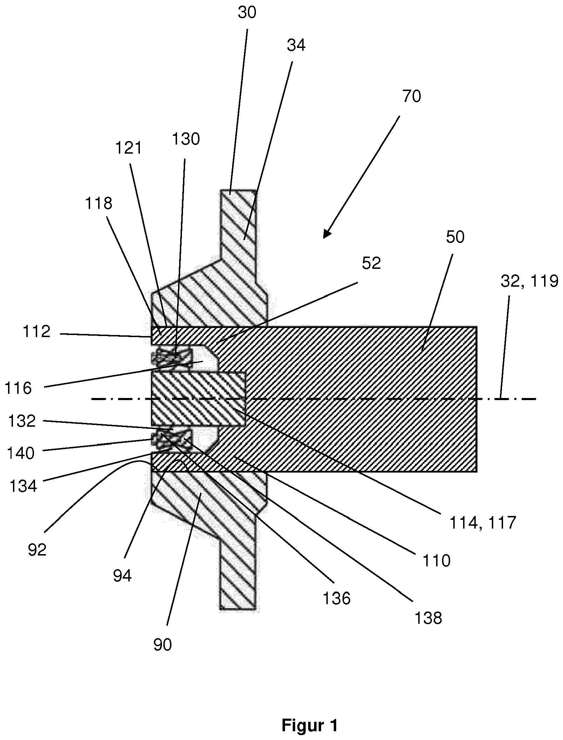

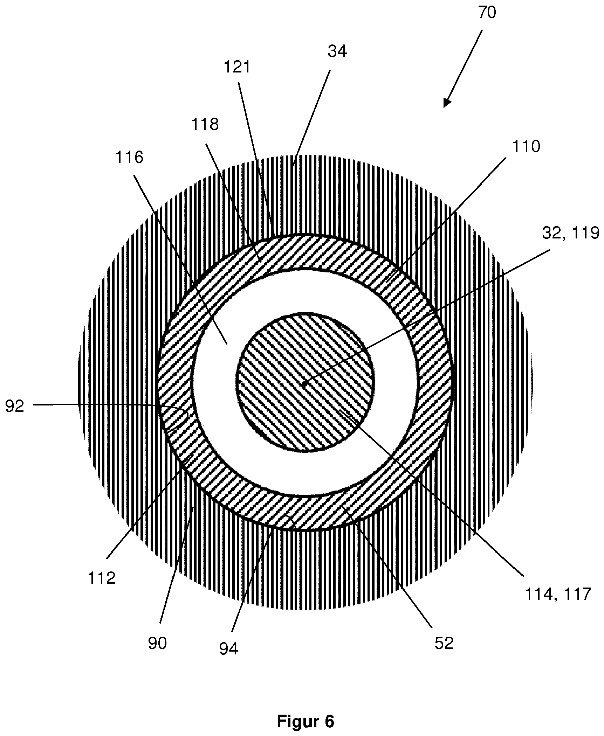

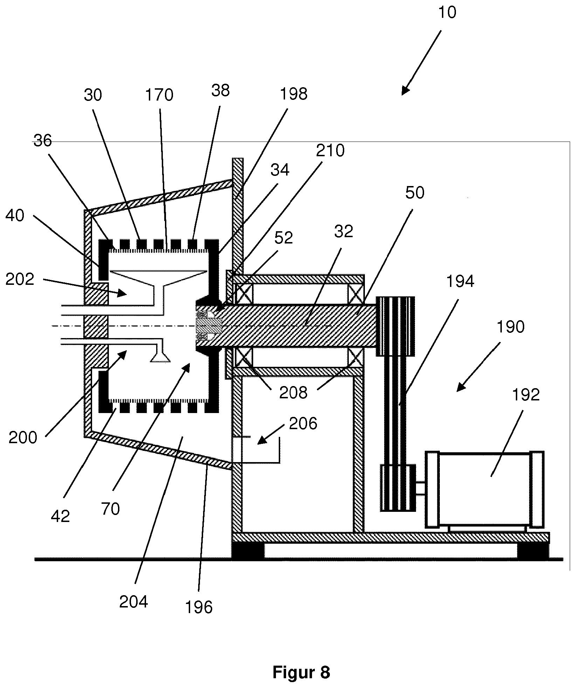

Wie in den Figuren 1-9 gezeigt weist eine Zentrifuge 10 zur Stofftrennung gemäß den diversen Ausführungsformen der Erfindung zum Beispiel auf eine Zentrifugen-Trommel 30, die eine Trommelachse 32 definiert (zum Beispiel um welche herum sich ein Zentrifugen-Trommelmantel 38 erstreckt (siehe Figur 8)) und die um die Trommelachse 32 drehbar gelagert ist, und eine Antriebswelle 50, die sich koaxial zur Trommelachse 32 erstreckt und die mit der Zentrifugen-Trommel 30 über eine Welle-Nabe-Verbindungseinrichtung 70 drehfest verbunden ist, um Drehantriebs-Drehmoment von der Antriebswelle 50 auf die Zentrifugen-Trommel 30 übertragen zu können (bzw. zu übertragen). Die Welle-Nabe-Verbindungseinrichtung 70 weist eine Nabe 90, die an (bzw. in) einer Trommelwand (zum Beispiel Trommelstirnwand) 34 der Zentrifugen-Trommel 30 ausgebildet ist und die eine sich koaxial zur Trommelachse 32 erstreckende Nabenöffnung 92 hat, welche einen Innenumfang 94 definiert, einen Einsteckabschnitt 110, der von einem Stirnendabschnitt 52 der Antriebswelle 50 gebildet ist und der in die Nabenöffnung 92 eingesteckt ist, wobei der Einsteckabschnitt 110 einen zentralen, zur Trommelachse 32 koaxialen (zum Beispiel zumindest im Wesentlichen zylinderförmigen) Zapfen 114 und eine den Zapfen 114 koaxial umgebende Ringaussparung 116 aufweist, welche am bzw. an einem Stirnende 112 des Einsteckabschnitts 110 (welches gleich dem Stirnende der Antriebswelle 50 ist, das der Zentrifugen-Trommel 30 zugewandt ist) offen ist und welche außenumfänglich von einer äußeren Ringwand 118 des Einsteckabschnitts 110 umgeben ist, welche Ringwand 118 außenumfänglich mit dem Innenumfang 94 der Nabenöffnung 92 in Kontakt ist, und wenigstens einen Spannsatz 130 auf, der in die Ringaussparung 116 eingesetzt ist und von welchem rings des zentralen Zapfens 114 eine radiale Spannkraft erzeugbar ist, mittels deren die äußere Ringwand 118 außenumfänglich radial (nach außen) gegen den Innenumfang 94 der Nabenöffnung 92 verspannbar (bzw. spannbar) ist.

Die Zentrifuge 10 zur Stofftrennung kann zum Beispiel eine Filterzentrifuge zum Ausfiltern eines Feststoffmaterials aus einer Suspension sein, welche ein Filtermittel 170 (zum Beispiel ein Filtertuch, welches aus einem Gewebematerial hergestellt ist, zum Beispiel ein Filtersieb) aufweist, welches sich rings der Trommelachse 32 entlang einer Innenumfangsfläche 36 der Zentrifugen-Trommel 30 erstreckt und an welchem in einem Filterbetrieb der Filterzentrifuge ausgefiltertes Feststoffmaterial anhaften bleibt (siehe zum Beispiel Figur 8).

Die Trommelachse 32 kann beliebig angeordnet sein/werden, zum Beispiel zumindest im Wesentlichen horizontal (Horizontal-Filterzentrifuge) oder zumindest im Wesentlichen vertikal (Vertikal-Filterzentrifuge). Die Zentrifugen-Trommel 30 kann zum Beispiel nur einseitig mittels der Antriebswelle 50 und damit fliegend drehgelagert sein. Figur 8 zeigt zum Beispiel eine geschnittene Seitenansicht einer Horizontal-Filterzentrifuge, wobei die Zentrifugen-Trommel 30 fliegend drehgelagert ist.

Der Zapfen 114 kann zum Beispiel ein von der Antriebswelle 50 separates Bauteil sein, das stirnseitig in die Antriebswelle 50 und damit in deren Einsteckabschnitt 110 eingesetzt und dort fest angebracht ist. Der Zapfen 114 kann zum Beispiel von einem Schraubbolzen 115 (allein oder in Verbindung mit einem anderen Bauteil, wie zum Beispiel einer darauf aufgesetzten Hülse 122, zum Beispiel die sich koaxial zur Trommelachse 32 längserstreckt und zum Beispiel an welcher der Spannsatz 130 angreift) gebildet sein, welcher stirnseitig in den Einsteckabschnitt 110 geschraubt ist und zum Beispiel sich koaxial zur Trommelachse 32 längserstreckt. Der Schraubbolzen 115 kann zum Beispiel eine Schraubbolzenlängsachse 120 definieren, die zumindest im Wesentlichen deckungsgleich mit der Trommelachse 32 ist bzw. zu dieser fluchtet. Der Zapfen 114 kann zum Beispiel von einem stofflich einstückigen Zylinderzapfen 117 gebildet sein, der eine Zylinderachse 119 definiert, die koaxial zu der Trommelachse 32 ist (zum Beispiel die mit der Trommelachse 32 zumindest im Wesentlichen deckungsgleich ist bzw. zu dieser fluchtet), und der stirnseitig in den Einsteckabschnitt 110 gepresst ist. Der Zapfen 114 kann zum Beispiel von einem zentralen Zapfenteil 124, welcher stirnseitig in dem Einsteckabschnitt 110 befestigt ist und welcher eine Längsachse 126 definieren kann, die koaxial zu der Trommelachse 32 ist (zum Beispiel die mit der Trommelachse 32 zumindest im Wesentlichen deckungsgleich ist bzw. zu dieser fluchtet), und einer Hülse 128 gebildet sein, welche auf den zentralen Zapfenteil 124 gesetzt ist und an welcher der Spannsatz 130 angreift und welche zum Beispiel koaxial zur Trommelachse 32 sein kann. Der zentrale Zapfenteil 124 kann zum Beispiel von dem vorausgehend erläuterten Schraubbolzen 115 gebildet sein. Die Hülse 128 kann zum Beispiel zumindest im Wesentlichen hohlzylinderförmig sein. Alternativ kann der Zapfen 114 zum Beispiel stofflich einstückig (integral) von/mit der Antriebswelle 50 ausgebildet sein.

Die Ringwand 118 kann zum Beispiel stofflich einstückig (integral) von/mit der Antriebswelle 50 ausgebildet sein (siehe zum Beispiel Figuren 1-5, 8 und 9).

Wenn der Zapfen 114 und die Ringwand 118 stofflich einstückig von der Antriebswelle 50 ausgebildet sind, kann die Ringaussparung 116 zum Beispiel eine in/an dem Stirnendabschnitt 52 der Antriebswelle 50 angeordnete, zumindest im Wesentlichen ringförmige und zur Trommelachse koaxiale Nut sein, die in das Stirnende 112 der Antriebswelle 50 eingebracht ist/wird, zum Beispiel durch spanende Bearbeitung oder durch eine entsprechende Ausgestaltung einer Gussform zum Gießen der Antriebswelle 50.

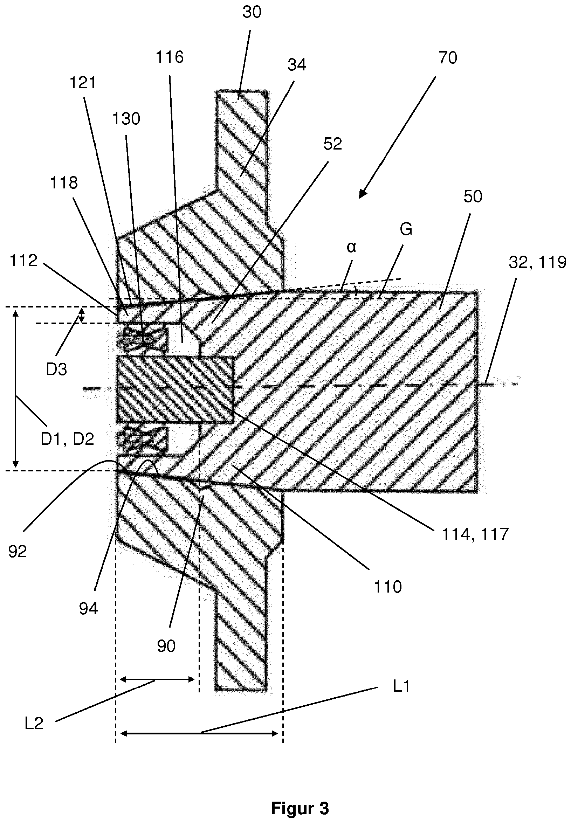

Der Einsteckabschnitt 110 kann außenumfänglich eine sich zu seinem Stirnende 112 hin verjüngende Konus-Form haben, wobei die Nabenöffnung 92 eine dazu komplementäre Konus-Form haben kann (siehe zum Beispiel Figuren 3-5). In einer geschnittenen Seitenansicht des Einsteckabschnitts 110 (bzw. der Welle-Nabe-Verbindungseinrichtung 70), wobei der Schnitt durch die / entlang der Trommelachse 32 verläuft, kann zum Beispiel ein Winkel α zwischen der Trommelachse 32 (bzw. einer Geraden G, die parallel zu der Trommelachse 32 verläuft) und einem von der äußeren Ringwand 118 definierten Außenumfang 121 (bzw. dem Innenumfang 94 der Nabenöffnung 92) gleich oder kleiner als 20° (zum Beispiel gleich oder kleiner als 15°, zum Beispiel gleich oder kleiner als 10°, zum Beispiel gleich oder kleiner als 5°) sein.

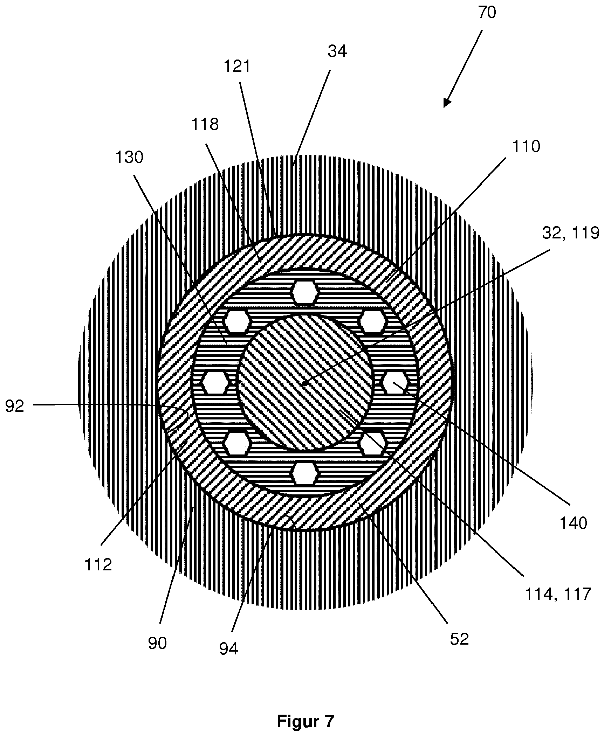

Der Spannsatz 130 ist ein ringförmiger Spannsatz 130 (siehe zum Beispiel Figur 7). Als (ringförmiger) Spannsatz 130 kann ein herkömmlicher, kommerziell erhältlicher Spannsatz 130 verwendet werden. Zum Beispiel ein Spannsatz 130, der aus zwei Spannringen besteht, die mittels Schrauben verspannt werden, oder ein Spannsatz 130, der aus vier Spannringen besteht, die mittels Schrauben verspannt werden. Der Spannsatz 130, der aus vier Spannringen besteht, weist zum Beispiel auf einen inneren Spannring 132, der in einem Verspannt-Zustand mit dem Zapfen 114 in Kontakt ist (bzw. gegen diesen verspannt ist), einen äußeren Spannring 134, der in einem Verspannt-Zustand mit einer Innenumfangsfläche der Ringwand 118 in Kontakt ist (bzw. gegen diese verspannt ist), einen ersten Verspannungsspannring 138 mit einer Mehrzahl von Gewinden zum Einschrauben von jeweils einer Spannschraube 140 und einen zweiten Verspannungsspannring 136 mit einer Mehrzahl von zum Beispiel zylinderförmigen Öffnungen, durch die jeweils eine Spannschraube 140 gesteckt wird, um die Spannschrauben 140 in die Gewinde des ersten Verspannungsspannrings 138 einzuschrauben. Wie in den Figuren gezeigt, können die Spannringe 132, 134, 136, 138 derart gestaltet sein, dass sich durch Einschrauben der Spannschrauben 140 der erste Verspannungsspannring 138 und der zweite Verspannungsspannring 136 entlang der Trommelachse 32 gesehen aufeinander zubewegen, wobei der innere Spannring 132 bezüglich der Trommelachse 32 radial nach innen gegen den Zapfen 114 gedrückt (bzw. verspannt) wird und der äußere Spannring 134 bezüglich der Trommelachse 32 radial nach außen gegen die Ringwand 118 gedrückt (bzw. verspannt) wird.

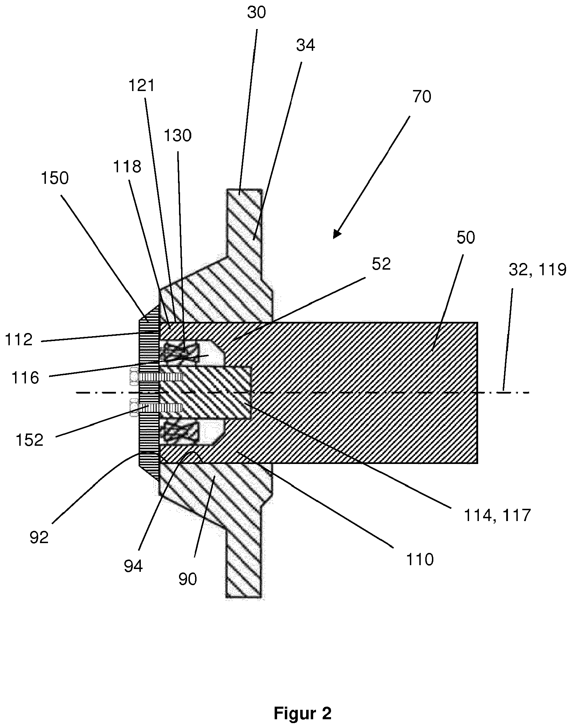

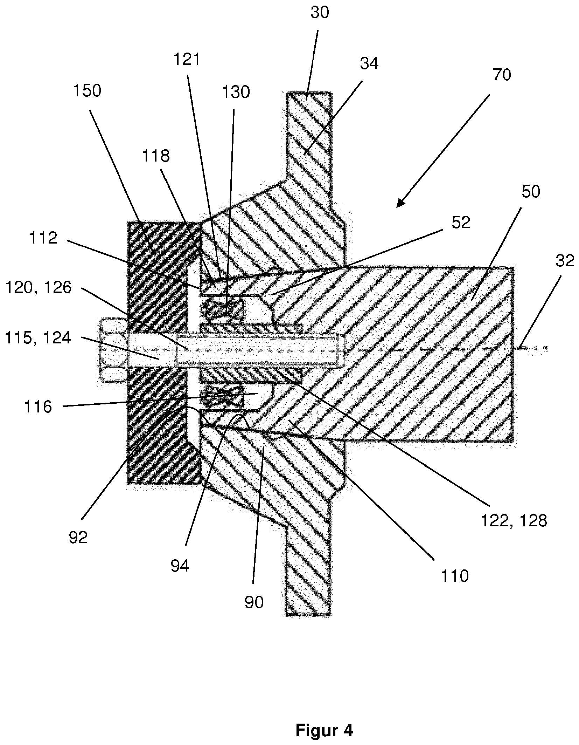

Die Welle-Nabe-Verbindungseinrichtung 70 kann ein stirnseitiges Spannstück 150 aufweisen, welches die Nabenöffnung 92 zumindest im Wesentlichen diametral überspannt (siehe zum Beispiel Figuren 2 und 4). Das Spannstück 150 kann zum Beispiel mittels zumindest eines Befestigungsmittels 152 (zum Beispiel mittels zumindest einer Schraube) mit dem Zapfen 114 verbunden sein. Durch das Spannstück 150 kann sich zum Beispiel der Schraubbolzen 115 hindurch erstrecken und sich gegen das Spannstück 150 axial abstützen, sodass der Einsteckabschnitt 110 durch Anziehen des Schraubbolzens 115 axial gegen die Nabe 90 spannbar ist. Das Spannstück 150 kann zum Beispiel als ein Deckel ausgebildet sein, welcher die Ringaussparung 116 stirnseitig zumindest im Wesentlichen abdeckt.

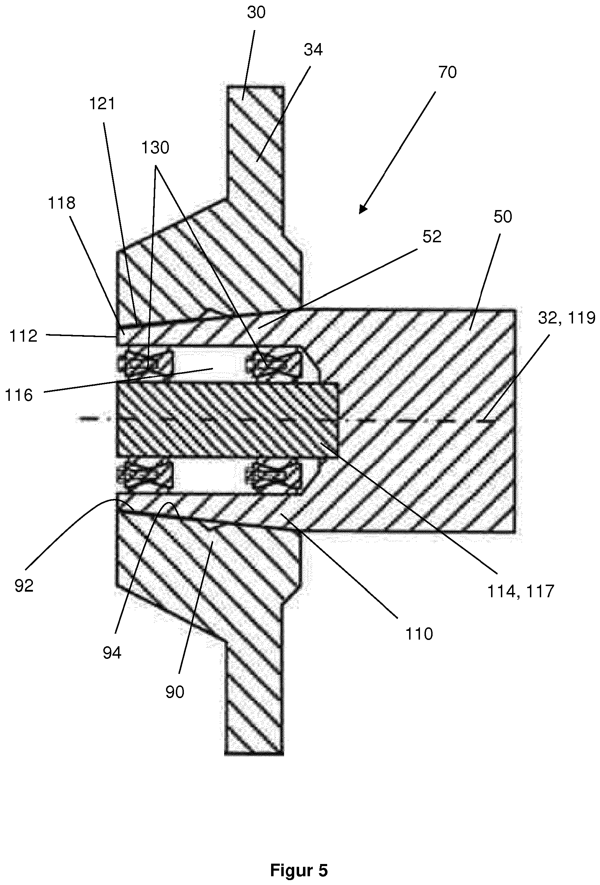

Die Welle-Nabe-Verbindungseinrichtung 70 kann zum Beispiel mehrere Spannsätze 130 aufweisen, die in der Ringaussparung 116 angeordnet sind und die entlang der Trommelachse 32 gesehen in einem (Axial-)Abstand voneinander angeordnet sind (siehe zum Beispiel Figur 5). Die mehreren Spannsätze 130 können (jeweils) von der oben beschriebenen Bauart sein.

Die Nabe 90 kann von/mit einer Trommelwand 34 der Zentrifugen-Trommel 30 stofflich einstückig (integral) ausgebildet sein (siehe zum Beispiel Figuren 1-5, 8 und 9).

Die Nabenöffnung 92 hat eine sich entlang der Trommelachse 32 erstreckende Nabenöffnung-Länge L1 und die Ringwand 118 hat eine sich entlang der Trommelachse 32 erstreckende Ringwand-Länge L2. Die Ringwand-Länge L2 kann zum Beispiel kürzer als die Nabenöffnung-Länge L1 sein (siehe zum Beispiel Figuren 1-4 und 8). Alternativ dazu kann die Ringwand-Länge L2 zum Beispiel gleich oder größer als die Nabenöffnung-Länge L1 sein (siehe zum Beispiel Figur 5). Die Nabenöffnung 92 hat ferner einen Nabenöffnung-Durchmesser D1, der an einer Stelle des geringsten Durchmessers der Nabenöffnung 92 ermittelt (bzw. gemessen) ist/wird. Die Nabenöffnung-Länge L1 kann gleich oder kleiner als der Nabenöffnung-Durchmesser D1 sein. Alternativ dazu kann die Nabenöffnung-Länge L1 größer als der Nabenöffnung-Durchmesser D1 sein.

Die Ringwand 118 hat eine Ringwandstärke (bzw. Ringwanddicke) D3, die an dem Stirnende 112 des Einsteckabschnitts 110 ermittelt ist/wird, und das Stirnende 112 des Einsteckabschnitts 110 hat einen Stirnende-Durchmesser D2, der an dem Stirnende 112 des Einsteckabschnitts 110 ermittelt ist/wird. Die Ringwandstärke D3 kann gleich oder kleiner als 30% (zum Beispiel gleich oder kleiner als 20%, zum Beispiel gleich oder kleiner als 10%, zum Beispiel gleich oder kleiner als 5%) des Stirnende-Durchmessers D2 sein.

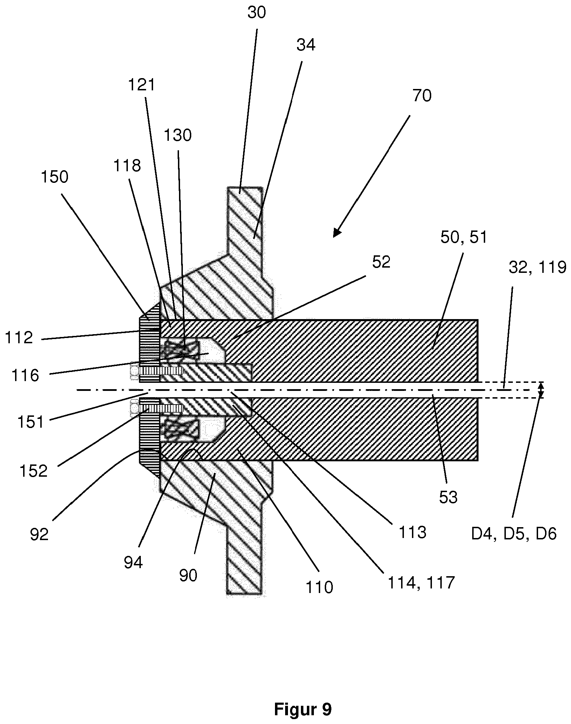

Wie in Figur 9 gezeigt, kann die Antriebswelle 50 zum Beispiel eine sich koaxial zur Trommelachse 32 erstreckende Wellenöffnung 53 haben, die einen Wellenöffnung-Durchmesser D4 definiert und sich in axialer Richtung durch die gesamte Antriebswelle 50 hindurch erstreckt. Die Antriebswelle 50 kann zum Beispiel eine Hohlwelle 51 sein. Der Zapfen 114 kann zum Beispiel eine sich koaxial zur Trommelachse 32 erstreckende Zapfenöffnung 113 haben, die einen Zapfenöffnung-Durchmesser D5 definiert und sich in axialer Richtung durch den gesamten Zapfen 114 hindurch erstreckt. Das Spannstück 150 kann zum Beispiel eine sich koaxial zur Trommelachse 32 erstreckende Spannstücköffnung 151 haben, die einen Spannstücköffnung-Durchmesser D6 definiert und sich in axialer Richtung durch das gesamte Spannstück 150 hindurch erstreckt. Der Wellenöffnung-Durchmesser D4, der Zapfenöffnung-Durchmesser D5 und der Spannstücköffnung-Durchmesser D6 können zum Beispiel zumindest im Wesentlichen gleich groß sein. Der Wellenöffnung-Durchmesser D4, der Zapfenöffnung-Durchmesser D5 und/oder der Spannstücköffnung-Durchmesser D6 können zum Beispiel gleich oder kleiner als 30% (zum Beispiel gleich oder kleiner als 20%, zum Beispiel gleich oder kleiner als 10%, zum Beispiel gleich oder kleiner als 5%) des Stirnende-Durchmessers D2 sein. Durch die Wellenöffnung 53, die Zapfenöffnung 113 und die Spannstücköffnung 151 kann zum Beispiel ein Fluid hindurchgeleitet werden (zum Beispiel der Zentrifugen-Trommel 30 zugeführt werden). Die Wellenöffnung 53, die Zapfenöffnung 113 und die Spannstücköffnung 151 können zum Beispiel zumindest ein (zum Beispiel bewegbares) Funktionsteil bzw. Funktionselement aufnehmen, das in die Zentrifugen-Trommel 30 hineinragen kann. Das Funktionsteil kann zum Beispiel eine Welle sein, die zum Beispiel in die gleiche Richtung wie die Antriebswelle 50 rotiert oder die stillsteht oder die in eine entgegengesetzte Richtung wie die Antriebswelle 50 rotiert oder die irgendeine andere mögliche Bewegung ausführt.

Wie in Figur 8 gezeigt, kann die Zentrifugen-Trommel 30 der Zentrifuge 10 gemäß den verschiedenen Ausführungsformen der Erfindung den Trommelmantel 38, welcher eine hohlzylindrische Form hat, die Trommelwand 34, welche an einem axialen Ende des Trommelmantels 38 (zum Beispiel in Figur 8 an einem rechten Ende des Trommelmantels 38) mit diesem verbunden ist und welche an einer zentralen Position davon die Nabe 90 aufweist, und einen (radial nach innen weisenden) Trommelkragen 40 aufweisen, welcher an dem anderen (bzw. gegenüberliegenden) axialen Ende des Trommelmantels 38 (zum Beispiel in Figur 8 an einem linken Ende des Trommelmantels 38) mit diesem verbunden ist und welcher eine zentrale Öffnung hat. Der Trommelmantel 38 hat zum Beispiel mehrere radiale Drainagebohrungen bzw. -löcher 42, durch die die Flüssigkeit einer Suspension in einem regulären Filterbetrieb aus der Zentrifugen-Trommel 30 abgeführt bzw. herausgeschleudert wird. Die Innenumfangsfläche 36 ist zum Beispiel von einer der Trommelachse 32 zugewandten (Innen-)Fläche des (hohlzylindrischen) Trommelmantels 38 gebildet. Die Drainagebohrungen bzw. -löcher 42 werden zum Beispiel vollständig von dem Filtermittel 170 abgedeckt.

Die Zentrifuge 10 gemäß den verschiedenen Ausführungsformen der Erfindung kann ferner einen Drehantrieb 190 aufweisen, welcher mit der Antriebswelle 50 und einer nicht gezeigten Steuervorrichtung verbunden ist. Die Steuervorrichtung kann eingerichtet sein, um den Drehantrieb 190 in einem Austragebetrieb so zu steuern, dass eine Drehgeschwindigkeit der Zentrifugen-Trommel 30 im Vergleich zu dem regulären Filterbetrieb (zum Beispiel um ein mehrfaches) kleiner ist. Der Drehantrieb 190 weist hier eine Antriebsvorrichtung 192 (zum Beispiel einen elektrischen Antriebsmotor) und eine Übertragungsvorrichtung 194 auf, mit der ein Drehantriebs-Drehmoment der Antriebsvorrichtung 192 auf die Antriebswelle 50 übertragen wird.

Die Zentrifuge 10 gemäß den verschiedenen Ausführungsformen der Erfindung kann ferner ein Zentrifugengehäuse 196 aufweisen, welches zum Beispiel zum Öffnen schwenkbar mit einem Maschinengestell bzw. Maschinengehäuse 198 verbunden ist. An dem Zentrifugengehäuse 196 können zum Beispiel eine Suspension-Zuführvorrichtung 200 zum Zuführen der Suspension zu der (bzw. in die) Zentrifugen-Trommel 30 sowie eine Feststoffmaterial-Austragvorrichtung 202 zum Austragen des ausgefilterten Feststoffmaterials aus der Zentrifugen-Trommel 30 angebracht sein. Im Geschlossen-Zustand des Zentrifugengehäuses 196 verschließt dieses die Öffnung des Trommelkragens 40 dicht, wobei die Suspension-Zuführvorrichtung 200 und die Feststoffmaterial-Austragvorrichtung 202 in die Zentrifugen-Trommel 30 hineinragen, und umgibt gemeinsam mit dem Maschinengestell 198 die Zentrifugen-Trommel 30, sodass die Zentrifugen-Trommel 30 in einem zwischen dem Zentrifugengehäuse 196 und dem Maschinengestell 198 abgedichtet ausgebildeten Raum (Verfahrensraum) 204 angeordnet ist. Ferner kann in dem Maschinengestell 198 auf Höhe eines tiefsten Punktes des Raumes 204 eine mit dem Raum 204 in Verbindung stehende Flüssigkeit-Austragvorrichtung 206 vorgesehen sein. Das Maschinengestell 198 kann ferner zum Beispiel Wälzlager 208 aufweisen, in denen die Antriebswelle 50 gelagert ist (zum Beispiel zumindest im Wesentlichen horizontal), wobei die Zentrifugen-Trommel 30 mittels der Antriebswelle 50 an dem Maschinengestell 198 zum Beispiel fliegend gelagert angebracht sein kann. Die Zentrifuge 10 hat ferner eine verfahrensraumseitige Hauptwellendichtung 210, die zwischen dem Raum 204 und den Wälzlagern 208 angeordnet ist und die mit einem Abschnitt der Antriebswelle 50 außenumfänglich in Kontakt ist, um die Wälzlager 208 von dem Raum 204 zu trennen, sodass die Wälzlager 208 nicht mit der Suspension in Kontakt kommen.

Die Funktionsweise der in Figur 8 gezeigten Zentrifuge 10 ist wie folgt. Mittels der Suspension-Zuführvorrichtung 200 wird der Zentrifugen-Trommel 30 im Rahmen des regulären Filterbetriebs der Zentrifuge 10 die zu filtrierende Suspension zugeführt. Die Zentrifugen-Trommel 30 wird mittels der Antriebsvorrichtung 190 in Rotation versetzt, wodurch die Suspension via Fliehkraft zur Innenumfangsfläche 36 der Zentrifugen-Trommel 30 gezwungen wird. Die Flüssigkeit der Suspension kann das an der Innenumfangsfläche 36 angebrachte Filtermittel 170 sowie die Zentrifugen-Trommel 30 durch die Drainagebohrungen bzw. -löcher 42 durchdringen und somit aus der Zentrifugen-Trommel 30 in den Raum 204 geschleudert werden. Die Flüssigkeit wird schließlich mittels der Flüssigkeit-Austragvorrichtung 206 aus dem Raum 204 abgeführt. Das Feststoffmaterial der Suspension wird durch das Filtermittel 170 zurückgehalten und dadurch aus der Suspension ausgefiltert. Schließlich wird bei Erreichen eines ausreichenden Ausschleuderns der Flüssigkeit das an dem Filtermittel 170 als Filterkuchen anliegende, ausgefilterte Feststoffmaterial im Rahmen des Austragebetriebs der Zentrifuge 10 von dem Filtermittel 170 mittels der Feststoffmaterial-Austragvorrichtung 202, zum Beispiel unter (gesteuertem) Drehen der Zentrifugen-Trommel 30, entfernt und aus der Zentrifugen-Trommel 30 ausgetragen. Der reguläre Filterbetrieb unterscheidet sich von dem Austragebetrieb zum Beispiel zumindest dadurch, dass die Drehgeschwindigkeit bzw. die Drehzahl der Zentrifugen-Trommel 30 im Austragebetrieb (zum Beispiel um ein mehrfaches) kleiner ist als im regulären Filterbetrieb.

Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich. Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche und deren Äquivalente definiert wird.

## Patentansprüche

1. Zentrifuge (10) zur Stofftrennung, mit
einer Zentrifugen-Trommel (30), die eine Trommelachse (32) definiert und die um die Trommelachse (32) drehbar gelagert ist, und
einer Antriebswelle (50), die sich koaxial zur Trommelachse (32) erstreckt und die mit der Zentrifugen-Trommel (30) über eine Welle-Nabe-Verbindungseinrichtung (70) drehfest verbunden ist, um Drehantriebs-Drehmoment von der Antriebswelle (50) auf die Zentrifugen-Trommel (30) übertragen zu können, wobei die Welle-Nabe-Verbindungseinrichtung (70) aufweist
eine Nabe (90), die an einer Trommelwand (34) der Zentrifugen-Trommel (30) ausgebildet ist und die eine sich koaxial zur Trommelachse (32) erstreckende Nabenöffnung (92) hat, welche einen Innenumfang (94) definiert,
einen Einsteckabschnitt (110), der von einem Stirnendabschnitt (52) der Antriebswelle (50) gebildet ist und der in die Nabenöffnung (92) eingesteckt ist, wobei der Einsteckabschnitt (110) einen zentralen, zur Trommelachse (32) koaxialen Zapfen (114) und eine den Zapfen (114) koaxial umgebende Ringaussparung (116) aufweist, welche an einem Stirnende (112) des Einsteckabschnitts (110) offen ist und welche außenumfänglich von einer äußeren Ringwand (118) des Einsteckabschnitts (110) umgeben ist, welche Ringwand (118) außenumfänglich mit dem Innenumfang (94) der Nabenöffnung (92) in Kontakt ist, und
wenigstens einen ringförmigen Spannsatz (130), der in die Ringaussparung (116) eingesetzt ist und von welchem rings des zentralen Zapfens (114) eine radiale Spannkraft erzeugbar ist, mittels deren die äußere Ringwand (118) außenumfänglich radial gegen den Innenumfang (94) der Nabenöffnung (92) verspannbar ist.

2. Zentrifuge (10) gemäß Anspruch 1, wobei der Zapfen (114) ein von der Antriebswelle (50) separates Bauteil ist, das stirnseitig in die Antriebswelle (50) eingesetzt und dort fest angebracht ist.

3. Zentrifuge (10) gemäß Anspruch 1 oder 2, wobei die Ringwand (118) stofflich einstückig von der Antriebswelle (50) ausgebildet ist.

4. Zentrifuge (10) gemäß einem der vorangehenden Ansprüche, wobei der Einsteckabschnitt (110) außenumfänglich eine sich zu seinem Stirnende (112) hin verjüngende Konus-Form hat, und wobei die Nabenöffnung (92) eine dazu komplementäre Konus-Form hat.

5. Zentrifuge (10) gemäß einem der vorangehenden Ansprüche, wobei der Zapfen (114) von einem Schraubbolzen (115) gebildet ist, welcher stirnseitig in den Einsteckabschnitt (110) geschraubt ist.

6. Zentrifuge (10) gemäß Anspruch 5, wobei die Welle-Nabe-Verbindungseinrichtung ein stirnseitiges Spannstück (150) aufweist, welches die Nabenöffnung (92) zumindest im Wesentlichen diametral überspannt und durch welches sich der Schraubbolzen (115) hindurch erstreckt, sodass der Einsteckabschnitt (110) durch Anziehen des Schaubbolzens axial gegen die Nabe (90) spannbar ist.

7. Zentrifuge (10) gemäß Anspruch 6, wobei das Spannstück (150) als ein Deckel ausgebildet ist, welcher die Ringaussparung (116) stirnseitig zumindest im Wesentlichen abdeckt.

8. Zentrifuge (10) gemäß einem der vorangehenden Ansprüche, wobei der Zapfen (114) gebildet ist von einem zentralen Zapfenteil (124), welcher stirnseitig in dem Einsteckabschnitt (110) befestigt ist, und einer Hülse (128), welche auf den zentralen Zapfenteil (124) gesetzt ist und an welcher der Spannsatz (130) angreift.

9. Zentrifuge (10) gemäß einem der vorangehenden Ansprüche, ferner mit mehreren Spannsätzen, die in der Ringaussparung (116) angeordnet sind und die entlang der Trommelachse (32) gesehen in einem Abstand voneinander angeordnet sind.

10. Zentrifuge (10) gemäß einem der vorangehenden Ansprüche, wobei die Zentrifugen-Trommel (30) nur einseitig mittels der Antriebswelle (50) und damit fliegend drehgelagert ist.

11. Zentrifuge (10) gemäß einem der vorangehenden Ansprüche, wobei die Zentrifuge (10) eine Filterzentrifuge ist, welche ein Filtermittel (170) aufweist, welches sich rings der Trommelachse (32) entlang einer Innenumfangsfläche (36) der Zentrifugen-Trommel (30) erstreckt und an welchem in einem Filterbetrieb der Filterzentrifuge ausgefiltertes Feststoffmaterial anhaften bleibt.

12. Zentrifuge (10) gemäß einem der vorangehenden Ansprüche, wobei die Nabe (90) von einer Trommelwand (34) der Zentrifugen-Trommel (30) stofflich einstückig ausgebildet ist.

13. Zentrifuge (10) gemäß einem der vorangehenden Ansprüche, wobei der Zapfen (114) von einem stofflich einstückigen Zylinderzapfen (117) gebildet ist, der eine Zylinderachse (119) definiert, die koaxial zu der Trommelachse (32) ist, und der stirnseitig in den Einsteckabschnitt (110) gepresst ist.

14. Zentrifuge (10) gemäß einem der vorangehenden Ansprüche, wobei die Nabenöffnung (92) eine sich entlang der Trommelachse (32) erstreckende Nabenöffnung-Länge (L1) hat, wobei die Ringwand (118) eine sich entlang der Trommelachse (32) erstreckende Ringwand-Länge (L2) hat, und wobei die Ringwand-Länge (L2) kürzer als die Nabenöffnung-Länge (L1) ist oder wobei die Ringwand-Länge (L2) gleich oder größer als die Nabenöffnung-Länge (L1) ist.

15. Zentrifuge (10) gemäß einem der vorangehenden Ansprüche, wobei die Antriebswelle (50) eine sich koaxial zur Trommelachse (32) erstreckende Wellenöffnung (53) hat, die einen Wellenöffnung-Durchmesser (D4) definiert und sich in axialer Richtung durch die gesamte Antriebswelle (50) hindurch erstreckt, wobei der Zapfen (114) eine sich koaxial zur Trommelachse (32) erstreckende Zapfenöffnung (113) hat, die einen Zapfenöffnung-Durchmesser (D5) definiert und sich in axialer Richtung durch den gesamten Zapfen (114) hindurch erstreckt, wobei das Spannstück (150) eine sich koaxial zur Trommelachse (32) erstreckende Spannstücköffnung (151) hat, die einen Spannstücköffnung-Durchmesser (D6) definiert und sich in axialer Richtung durch das gesamte Spannstück (150) hindurch erstreckt, und wobei optional der Wellenöffnung-Durchmesser (D4), der Zapfenöffnung-Durchmesser (D5) und der Spannstücköffnung-Durchmesser (D6) zumindest im Wesentlichen gleich groß sind.

## Claims

1. Centrifuge (10) for material separation, comprising
a centrifuge drum (30), which defines a drum axis (32) and which is rotatably supported about the drum axis (32), and
a drive shaft (50), which coaxially extends to the drum axis (32) and which is non-rotatably connected to the centrifuge drum (30) via a shaft-hub connection device (70) to be able to transfer rotary drive torque from the drive shaft (50) to the centrifuge drum (30), wherein the shaft-hub connection device (70) comprises
a hub (90), which is formed on a drum wall (34) of the centrifuge drum (30) and which has a hub opening (92) coaxially extending to the drum axis (32) and defining an inner circumference (94),
an insertion portion (110), which is formed by a front end portion (52) of the drive shaft (50) and which is inserted into the hub opening (92), wherein the insertion portion (110) comprises a central pin (114) being coaxial to the drum axis (32) and an annular recess (116) coaxially surrounding the pin (114), which is open at a front end (112) of the insertion portion (110) and which is outer circumferentially surrounded by an outer annular wall (118) of the insertion portion (110), which annular wall (118) is outer circumferentially in contact with the inner circumference (94) of the hub opening (92), and
at least one clamping set (130), which is inserted into the annular recess (116) and by which a radial clamping force can be generated around the central pin (114), by which the outer annular wall (118) can outer circumferentially and radially be braced against the inner circumference (94) of the hub opening (92).

2. Centrifuge (10) according to claim 1, wherein the pin (114) is a separate component from the drive shaft (50), which is inserted into the drive shaft (50) at the front end and is fixedly attached there.

3. Centrifuge (10) according to claim 1 or 2, wherein the annular wall (118) is materially formed in one piece from the drive shaft (50).

4. Centrifuge (10) according to one of the preceding claims, wherein the insertion portion (110) outer circumferentially has a cone shape tapering towards its front end (112), and wherein the hub opening (92) has a cone shape complementary thereto.

5. Centrifuge (10) according to one of the preceding claims, wherein the pin (114) is formed by a screw bolt (115), which is screwed into the insertion portion (110) at the front end.

6. Centrifuge (10) according to claim 5, wherein the shaft-hub connection device comprises a front end clamping piece (150) which at least substantially diametrically spans over the hub opening (92) and through which the screw bolt (115) extends, so that the insertion portion (110) is axially braceable against the hub (90) by tightening the screw bolt.

7. Centrifuge (10) according to claim 6, wherein the clamping piece (150) is formed as a cover, which at least substantially covers the annular recess (116) at the front end.

8. Centrifuge (10) according to one of the preceding claims, wherein the pin (114) is formed by a central pin part (124), which is fixed in the insertion portion (110) at the front end, and a sleeve (128), which is set on the central pin part (124) and on which the clamping set (130) engages.

9. Centrifuge (10) according to one of the preceding claims, further comprising multiple clamping sets, which are disposed in the annular recess (116) and which are disposed at a distance from one another as seen along the drum axis (32).

10. Centrifuge (10) according to one of the preceding claims, wherein the centrifuge drum (30) is rotatably supported on one side only by means of the drive shaft (50) and thus overhung.

11. Centrifuge (10) according to one of the preceding claims, wherein the centrifuge (10) is a filter centrifuge, which comprises a filter means (170), which extends around the drum axis (32) along an inner circumferential surface (36) of the centrifuge drum (30) and to which solid material filtered out in a filter operation of the filter centrifuge remains adhering.

12. Centrifuge (10) according to one of the preceding claims, wherein the hub (90) is materially formed in one piece from a drum wall (34) of the centrifuge drum (30).

13. Centrifuge (10) according to one of the preceding claims, wherein the pin (114) is formed by a materially one-piece cylinder pin (117), which defines a cylinder axis (119) being coaxial to the drum axis (32) and which is pressed into the insertion portion (110) at the front end.

14. Centrifuge (10) according to one of the preceding claims, wherein the hub opening (92) has a hub opening length (L1) extending along the drum axis (32), wherein the annular wall (118) has an annular wall length (L2) extending along the drum axis (32), and wherein the annular wall length (L2) is shorter than the hub opening length (L1) or wherein the annular wall length (L2) is equal to or greater than the hub opening length (L1).

15. Centrifuge (10) according to one of the preceding claims, wherein the drive shaft (50) has a shaft opening (53) extending coaxially to the drum axis (32), which defines a shaft opening diameter (D4) and extends through the entire drive shaft (50) in the axial direction, wherein the pin (114) has a pin opening (113) extending coaxially to the drum axis (32), which defines a pin opening diameter (D5) and extends through the entire pin (114) in the axial direction, wherein the clamping piece (150) has a clamping piece opening (151) extending coaxially to the drum axis (32), which defines a clamping piece opening diameter (D6) and extends through the entire clamping piece (150) in the axial direction, and wherein, optionally, the shaft opening diameter (D4), the pin opening diameter (D5) and the clamping piece opening diameter (D6) are at least substantially the same size.

## Revendications

1. Centrifugeuse (10) pour la séparation de matériaux, comprenant :
un tambour de centrifugeuse (30), qui définit un axe de tambour (32) et qui est supporté de manière rotative autour de l'axe de tambour (32), et
un arbre d'entraînement (50), qui s'étend coaxialement à l'axe (32) de tambour et qui est relié de manière solidaire en rotation au tambour de centrifugeuse (30) par l'intermédiaire d'un dispositif de liaison arbre-moyeu (70) pour pouvoir transférer du couple d'entraînement rotatif de l'arbre d'entraînement (50) au tambour de centrifugeuse (30), le dispositif de liaison arbre-moyeu (70) comprenant :
un moyeu (90), qui est formé sur une paroi de tambour (34) du tambour de centrifugeuse (30) et qui présente une ouverture de moyeu (92) s'étendant coaxialement à l'axe de tambour (32) et définissant une circonférence intérieure (94),
une partie d'insertion (110), qui est formée par une partie d'extrémité avant (52) de l'arbre d'entraînement (50) et qui est insérée dans l'ouverture de moyeu (92), dans laquelle la partie d'insertion (110) comprend un tenon central (114) qui est coaxial à l'axe de tambour (32) et un évidement annulaire (116) entourant coaxialement le tenon (114), qui est ouverte à une extrémité avant (112) de la partie d'insertion (110) et qui est entourée sur sa circonférence extérieure par une paroi annulaire extérieure (118) de la partie d'insertion (110), laquelle paroi annulaire (118) est en contact sur sa circonférence extérieure avec la circonférence intérieure (94) de l'ouverture de moyeu (92), et
au moins un ensemble de serrage (130), qui est inséré dans l'évidement annulaire (116) et par lequel une force de serrage radiale peut être générée tout autour du tenon central (114), par laquelle la paroi annulaire extérieure (118) peut être serrée sur sa circonférence extérieure et radialement contre la circonférence intérieure (94) de l'ouverture de moyeu (92).

2. Centrifugeuse (10) selon la revendication 1, dans laquelle le tenon (114) est un composant séparé de l'arbre d'entraînement (50), qui est inséré dans l'arbre d'entraînement (50) à l'extrémité avant et y est fixé.

3. Centrifugeuse (10) selon la revendication 1 ou 2, dans laquelle la paroi annulaire (118) est formée matériellement d'une seule pièce à partir de l'arbre d'entraînement (50).

4. Centrifugeuse (10) selon l'une quelconque des revendications précédentes, dans laquelle la partie d'insertion (110) présente, sur sa circonférence extérieure, une forme conique se rétrécissant vers son extrémité avant (112), et dans laquelle l'ouverture de moyeu (92) présente une forme conique complémentaire à celle-ci.

5. Centrifugeuse (10) selon l'une quelconque des revendications précédentes, dans laquelle le tenon (114) est formée par un boulon fileté (115), qui est vissé dans la partie d'insertion (110) à l'extrémité avant.

6. Centrifugeuse (10) selon la revendication 5, dans laquelle le dispositif de liaison arbre-moyeu comprend une pièce de serrage (150) à l'extrémité avant qui enjambe au moins sensiblement diamétralement l'ouverture de moyeu (92) et à travers laquelle s'étend le boulon fileté (115), de sorte que la partie d'insertion (110) peut être serrée axialement contre le moyeu (90) en serrant le boulon fileté.

7. Centrifugeuse (10) selon la revendication 6, dans laquelle la pièce de serrage (150) est réalisée sous forme de couvercle, qui recouvre au moins sensiblement l'évidement annulaire (116) à l'extrémité avant.

8. Centrifugeuse (10) selon l'une quelconque des revendications précédentes, dans laquelle le tenon (114) est formé par une partie centrale de tenon (124), qui est fixée dans la partie d'insertion (110) à l'extrémité avant, et une douille (128), qui est placée sur la partie centrale de tenon (124) et sur laquelle l'ensemble de serrage (130) s'engage.

9. Centrifugeuse (10) selon l'une quelconque des revendications précédentes, comprenant en outre plusieurs ensembles de serrage, qui sont disposés dans l'évidement annulaire (116) et qui sont disposés à une distance les uns des autres selon une vue le long de l'axe de tambour (32).

10. Centrifugeuse (10) selon l'une quelconque des revendications précédentes, dans laquelle le tambour de centrifugeuse (30) est supporté de manière rotative sur un seul côté au moyen de l'arbre d'entraînement (50) et est ainsi en porte-à-faux.

11. Centrifugeuse (10) selon l'une quelconque des revendications précédentes, dans laquelle la centrifugeuse (10) est une centrifugeuse filtrante, qui comprend un moyen de filtrage (170), qui s'étend tout autour de l'axe de tambour (32) le long d'une surface circonférentielle intérieure (36) du tambour de centrifugeuse (30) et auquel une matière solide filtrée lors d'une opération de filtrage de la centrifugeuse filtrante reste adhérente.

12. Centrifugeuse (10) selon l'une quelconque des revendications précédentes, dans laquelle le moyeu (90) est matériellement formé d'une seule pièce à partir d'une paroi (34) du tambour de la centrifugeuse (30).

13. Centrifugeuse (10) selon l'une quelconque des revendications précédentes, dans laquelle le tenon (114) est formé par un tenon de cylindre (117) matériellement d'une seule pièce, qui définit un axe de cylindre (119) étant coaxial à l'axe de tambour (32) et qui est pressé dans la partie d'insertion (110) à l'extrémité avant.

14. Centrifugeuse (10) selon l'une quelconque des revendications précédentes, dans laquelle l'ouverture de moyeu (92) présente une longueur d'ouverture de moyeu (L1) s'étendant le long de l'axe de tambour (32), dans laquelle la paroi annulaire (118) présente une longueur de paroi annulaire (L2) s'étendant le long de l'axe de tambour (32), et dans laquelle la longueur de paroi annulaire (L2) est plus courte que la longueur d'ouverture de moyeu (L1) ou dans laquelle la longueur de paroi annulaire (L2) est égale ou supérieure à la longueur d'ouverture de moyeu (L1).

15. Centrifugeuse (10) selon l'une quelconque des revendications précédentes, dans laquelle l'arbre d'entraînement (50) présente une ouverture d'arbre (53) s'étendant coaxialement à l'axe de tambour (32), qui définit un diamètre d'ouverture d'arbre (D4) et qui s'étend à travers l'arbre d'entraînement (50) entier dans la direction axiale, dans laquelle le tenon (114) présente une ouverture de tenon (113) s'étendant coaxialement à l'axe de tambour (32), qui définit un diamètre d'ouverture de tenon (D5) et qui s'étend à travers le tenon (114) entier dans la direction axiale, où la pièce de serrage (150) présente une ouverture de pièce de serrage (151) s'étendant coaxialement à l'axe de tambour (32), qui définit un diamètre d'ouverture de pièce de serrage (D6) et qui s'étend à travers la pièce de serrage (150) entière dans la direction axiale, et où, éventuellement, le diamètre d'ouverture de l'arbre (D4), le diamètre d'ouverture du tenon (D5) et le diamètre d'ouverture de la pièce de serrage (D6) sont au moins sensiblement de même taille.
